# EUROPEAN PATENT APPLICATION

(11) **EP 4 723 326 A1**
(43) Date of publication of application: **08.04.2026**
(21) Application number: 25195061.4
(22) Date of filing: 11.08.2025
(51) Int. Cl.: H01M 50/204, H01M 50/291, H01M 50/293, H01M 50/342

(54) **POWER STORAGE DEVICE**

(30) Priority: 01.10.2024 JP 2024172448
(71) Applicant: TOYOTA JIDOSHA KABUSHIKI KAISHA, Toyota-shi, Aichi-ken 471-8571 (JP)
(72) Inventor: INOUE, Shigeyuki, Toyota-shi, Aichi-ken, 471-8571 (JP); SUGIE, Kazuki, Toyota-shi, Aichi-ken, 471-8571 (JP); KUMAZAWA, Kazuya, Toyota-shi, Aichi-ken, 471-8571 (JP)
(74) Representative: TBK

(57) **Abstract**

A power storage device (10) includes: a plurality of power storage cells (100); and an insulator member (150) having a shape extending from a power storage cell disposed at one end in a first direction to a power storage cell disposed at the other end in the first direction. Each power storage cell has a valve locating surface (114a), and each valve locating surface (114a) includes a safety valve (SV). The insulator member (150) is in contact with the valve locating surface (114a) and includes a plurality of intermediate vulnerable portions (152). Each intermediate vulnerable portion (152) is formed at a position between a pair of power storage cells (100) adjacent to each other in the first direction, and extends in the second direction.

## Description

### CROSS REFERENCE TO RELATED APPLICATIONS

This nonprovisional application is based on Japanese Patent Application No. 2024-172448 filed on October 1, 2024, the entire content of which is hereby incorporated by reference.

### BACKGROUND

### Field

The present disclosure relates to a power storage device.

### Description of the Background Art

For example, Japanese National Patent Publication No. 2024-501935 discloses an electrical device, including: a plurality of battery cells; a first housing accommodating the plurality of battery cells; a second housing accommodating the first housing; and an isolation member disposed within the second housing. The isolation member supports the first housing above the bottom surface of the second housing. A collection cavity is formed below the isolation member in the second housing. The lower surface of the housing of the battery cells includes a third vulnerable region, the bottom surface of the first housing includes a pressure release region, and the isolation member includes a second vulnerable region. The second vulnerable region is made of a material that has a lower melting point than a region of the isolation member, other than the second vulnerable region. The emissions expelled from the battery cell through the third vulnerable region of the battery cell flow into the collection cavity, formed below the isolation member, via the pressure release region and the second vulnerable region.

### SUMMARY

In the electrical device disclosed in Japanese National Patent Publication No. 2024-501935, in order to prevent emissions, expelled from one battery cell, from coming into contact with the lower surface of an adjacent battery cell, it is considered to provide an insulator member covering the lower surfaces of the plurality of battery cells. In doing so, however, there is a concern, when the emissions are expelled from one battery cell, that the emissions may be deposited between an adjacent battery cell and the insulator member.

An object of the present disclosure is to provide a power storage device which can prevent the emissions from a power storage cell from coming into contact with a safety valve of an adjacent cell.

A power storage device according to one aspect of the present disclosure includes: a plurality of power storage cells aligned along a first direction; and an insulator member having a shape extending from a power storage cell disposed at one end of the plurality of power storage cells in the first direction to a power storage cell disposed at the other end of the plurality of power storage cells in the first direction, wherein the plurality of power storage cells each have a valve locating surface, and each valve locating surface includes a safety valve, the insulator member is in contact with the valve locating surface and includes a plurality of intermediate vulnerable portions, and each intermediate vulnerable portion is formed at a position opposed to between a pair of power storage cells adjacent to each other in the first direction, and extends in a second direction orthogonal to both the first direction and an up-down direction of the power storage device.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a diagram schematically showing a vehicle including a power storage device according to one embodiment of the present disclosure.
Fig. 2 is a perspective view schematically showing the power storage device, a frame member, a front component, and a rear component.
Fig. 3 is a cross-sectional view taken along III-III line of Fig. 2.
Fig. 4 is a cross-sectional view taken along IV-IV line of Fig. 3.
Fig. 5 is a bottom view schematically showing a power storage stack and an insulator member.
Fig. 6 is a bottom view schematically showing a variation of arrangement of an adhesive member.
Fig. 7 is a bottom view schematically showing a variation of a counter vulnerable portion.
Fig. 8 is a bottom view schematically showing a variation of a counter vulnerable portion.

### DESCRIPTION OF THE PREFERRED EMBODIMENTS

Embodiments according to the present disclosure will be described, with reference to the accompanying drawings. Referring now to the drawings wherein like numerals are used to refer to like or corresponding members.

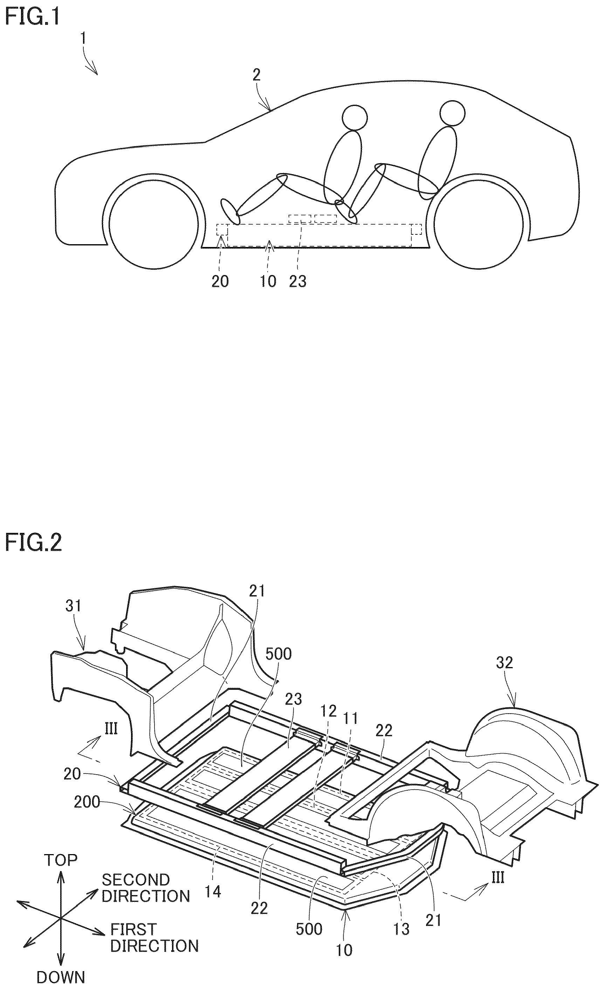

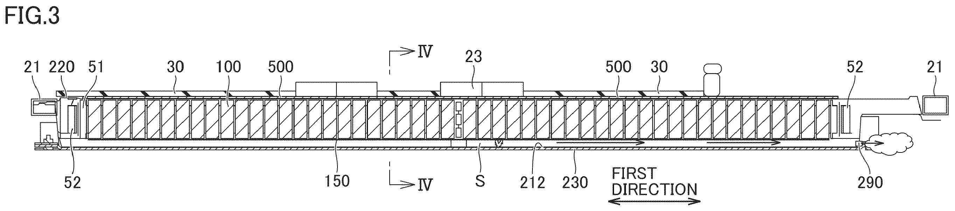

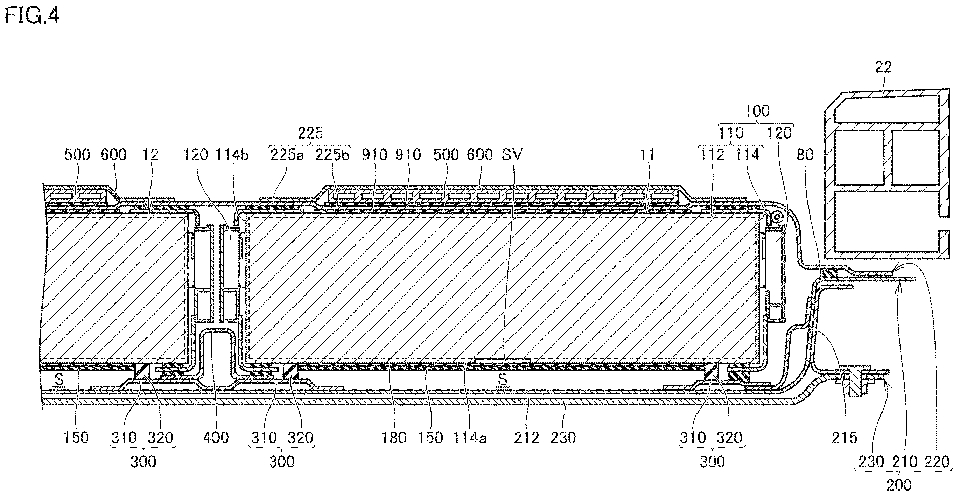

Fig. 1 is a diagram schematically showing a vehicle including a power storage device according to an embodiment of the present disclosure. Fig. 2 is a perspective view schematically showing the power storage device, a frame member, and a vehicle frame. Fig. 3 is a cross-sectional view taken along III-III line of Fig. 2. Fig. 4 is a cross-sectional view taken along IV-IV line of Fig. 3.

As shown in Fig. 1, a vehicle 1 includes a vehicle body 2 and a power storage device 10. Examples of vehicle 1 include a hybrid electric vehicle, a plug-in hybrid electric vehicle, and a battery electric vehicle.

As shown in Figs. 1 and 2, vehicle body 2 includes a frame member 20, a front component 31, and a rear component 32. Frame member 20 is disposed on the bottom of vehicle body 2. Frame member 20 has a pair of first frames 21, a pair of second frames 22, and cross frames 23.

The pair of first frames 21 are opposite to each other in a first direction. The first direction may be a direction in parallel to the front-rear direction of vehicle 1. In the example shown in Fig. 2, first frame 21 disposed on the front side of vehicle 1 has a shape extending in a second direction orthogonal to both the first direction and the up-down direction of vehicle 1. First frame 21 disposed on the rear side of vehicle 1 extends in the second direction and has a shape that is convex in the posterior direction. The second direction may be in parallel to the left-right direction (the width direction) of vehicle 1.

The pair of second frames 22 are opposite to each other in the second direction. Each second frame 22 has a shape extending along the first direction. The ends of each second frame 22 in the first direction are connected to first frames 21. The pair of second frames 22 and the pair of first frames 21 form a generally rectangular cylindrical shape surrounding power storage device 10.

Cross frames 23 are disposed between the pair of first frames 21 and connect the pair of second frames 22 together. Cross frames 23 constitute a seat cross, for example.

Front component 31 is connected to the front portion of frame member 20. Rear component 32 is connected to the rear portion of frame member 20.
Components 31 and 32 each may be formed by aluminum die cast.

Power storage device 10 is attached to frame member 20. As shown in Figs. 2 and 3, power storage device 10 is disposed below cross frames 23. As shown in Figs. 1 to 4, power storage device 10 includes four power storage stacks 11, 12, 13, and 14, insulator members 150, adhesive members 180, a housing 200, structural members 300, reinforcements 400, coolers 500, and covering members 600. Note that the number of power storage stacks is not limited to four. Note that the covering members 600 are not shown in Fig. 2.

Power storage stacks 11 to 14 each include at least one power storage cell 100. In the present embodiment, power storage stacks 11 to 14 each include a power storage cell group including multiple (e.g., 50) power storage cells 100 aligned along the first direction. Each of power storage stacks 11 to 14 may further include multiple spacers. Each spacer is disposed between a pair of power storage cells 100 adjacent to each other in the power storage cell group. Power storage stacks 11 to 14 are each formed in a cuboid shape elongated in the first direction. As shown in Fig. 2, four power storage stacks 11 to 14 are aligned along the second direction.

As shown in Fig. 3, a pair of end plates 51 are disposed at opposing ends of power storage cells 100 in the first direction, flanking power storage cells 100 in the first direction. A monitoring unit (smart battery managements) 52 is disposed on the outer side of each end plate 51 in the first direction.

As shown in Fig. 4, each power storage cell 100 has a cell body 110 and a pair of external terminals 120. Note that Fig. 4 shows a power storage cell 100 included in first power storage stack 11 and a portion of a power storage cell 100 included in second power storage stack 12.

Cell body 110 has an electrode 112 and a cell case 114. The direction of thickness of cell body 110 corresponds to the first direction. The width direction (a direction orthogonal to both the direction of thickness and the up-down direction) of cell body 110 corresponds to the second direction.

Electrode 112 may be configured of a winding having a cathode sheet and an anode sheet wound around it via a separator in between, or a stack having a cathode sheet and an anode sheet stacked via a separator in between. Electrode 112 is formed in a shape elongated in the second direction.

Cell case 114 accommodates electrode 112. Cell case 114 is formed in a cuboid shape. Cell case 114 is made of a metal such as aluminum. Cell case 114 includes a valve locating surface 114a and a terminal locating surface 114b.

A safety valve SV is disposed in valve locating surface 114a. In the present embodiment, valve locating surface 114a is configured of the lower surface of cell case 114. However, valve locating surface 114a may be configured of the upper surface of cell case 114, or a side surface of cell case 114 in the second direction.

An external terminal 120 is disposed on terminal locating surface 114b. In the present embodiment, terminal locating surface 114b is configured of a side surface of cell case 114 in the second direction. In other words, external terminals 120 project in the second direction from the side surfaces of cell case 114 in the second direction. One of the pair of external terminals 120 projects from a side surface of cell case 114 to one side in the second direction. The other one of the pair of external terminals 120 projects from a side surface of cell case 114 to the other side in the second direction.

Insulator member 150 has a shape extending from a power storage cell 100 that is disposed at one end in the first direction, among power storage cells 100 included in each of power storage stacks 11 to 14, to a power storage cell 100 that is disposed at the other end in the first direction, among power storage cells 100. Insulator member 150 may be formed in a flat plate shape. For example, insulator member 150 is made of mica obtained by a natural inorganic mineral being cured by heat press.

Insulator member 150 is in contact with valve locating surface 114a of each power storage cell 100. As shown in Fig. 4, insulator member 150 is connected to valve locating surfaces 114a by an adhesive member 180.

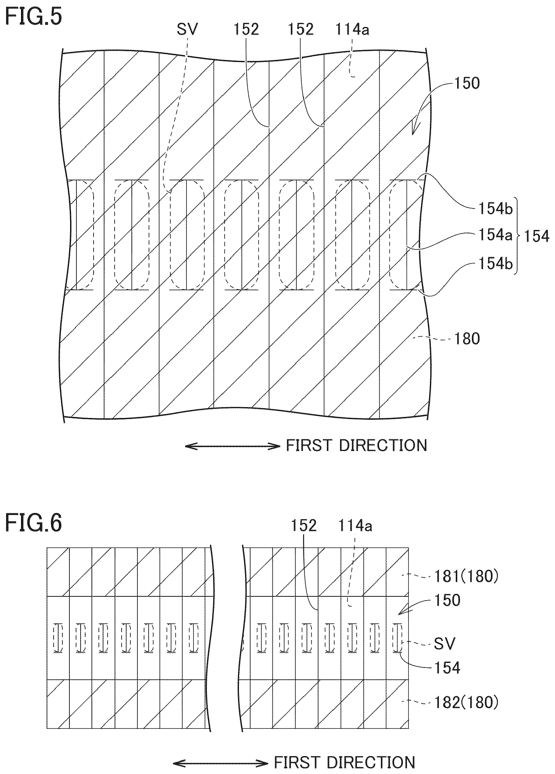

As shown in Fig. 5, insulator member 150 includes multiple intermediate vulnerable portions 152 and multiple counter vulnerable portions 154. Intermediate vulnerable portions 152 and counter vulnerable portions 154 each have a rigidity or a strength lower than any portions of insulator member 150, other than the respective intermediate vulnerable portions 152 and counter vulnerable portion 154. For example, vulnerable portions 152 and 154 each have a thickness less than the other portions of insulator member 150. In the present embodiment, vulnerable portions 152 and 154 each have a slit formed therein.

Each intermediate vulnerable portion 152 is formed at a position opposed to between a pair of power storage cells 100 adjacent to each other in the first direction. Each intermediate vulnerable portion 152 extends in the second direction. Preferably, each intermediate vulnerable portion 152 extends across insulator member 150 in the second direction. As a gas is expelled through safety valve SV for one power storage cell 100, a pair of intermediate vulnerable portions 152, which are at positions flanking a portion of insulator member 150 opposite the power storage cell 100, are ruptured by a pressure of the gas.

Each counter vulnerable portion 154 is formed at a position opposite a safety valve SV. Each counter vulnerable portion 154 is ruptured by a pressure of the gas expelled through safety valve SV of a power storage cell 100. As shown in Fig. 5, each counter vulnerable portion 154 has a first element 154a and a pair of second elements 154b.

First element 154a extends in the second direction (the width direction). First element 154a extends to positions corresponding to the ends of safety valve SV in the second direction.

The pair of second elements 154b are connected to the ends of first element 154a in the second direction and extend in the first direction.

Adhesive member 180 is disposed between the lower surface (valve locating surface 114a) of each of power storage stacks 11 to 14 and insulator member 150. Insulator member 150 is adhered to valve locating surface 114a by adhesive member 180. As shown in Fig. 5, adhesive member 180 is disposed on portions of insulator member 150, including portions opposite the respective safety valves SV. For example, adhesive member 180 may be disposed across a surface (the upper surface in the present embodiment) of insulator member 150 opposite the respective safety valves SV. Note that Fig. 5 shows the area in a hatched pattern, where adhesive member 180 is disposed.

Housing 200 accommodates power storage cells 100. In the present embodiment, housing 200 accommodates four power storage stacks 11 to 14. As shown in Fig. 4, housing 200 has a lower case 210, an upper cover 220, and a panel member 230.

Lower case 210 opens upward. Lower case 210 has a bottom wall 212 and a surrounding wall 215.

Bottom wall 212 is located below the respective power storage stacks 11 to 14. Bottom wall 212 may be formed in a flat plate shape.

Surrounding wall 215 upstands from the peripheral edge of bottom wall 212. Surrounding wall 215 has a shape collectively surrounding the lower portions of the respective power storage stacks 11 to 14.

Upper cover 220 is disposed above the power storage cells 100. In the present embodiment, upper cover 220 is disposed above the four power storage stacks 11 to 14. Upper cover 220 and lower case 210 accommodate the four power storage stacks 11 to 14 in a sealed state. The peripheral edge of upper cover 220 is connected to the peripheral edge of lower case 210 by bolts or the like via a sealing member.

As shown in Fig. 4, upper cover 220 has an upper wall 225. Upper wall 225 is disposed above at least one power storage cell 100. In the present embodiment, upper wall 225 is disposed above the four power storage stacks 11 to 14. Upper wall 225 has a top 225a and four recesses 225b.

Top 225a is formed flat. Top 225a overlaps, in the up-down direction of power storage device 10, the ends of the respective power storage stacks in the second direction.

Each recess 225b recedes downward from top 225a. Each recess 225b is formed flat. Each recess 225b is formed above the middle portion of each of power storage stacks 11 to 14 in the second direction. As shown in Fig. 4, the length of each recess 225b in the second direction is less than the length of power storage cell 100 in the second direction. Each recess 225b is in contact with the upper surface of cell case 114 via a thermally-conductive adhesive 910.

Panel member 230 is disposed below the lower case 210. Panel member 230 has a function of protecting lower case 210. Panel member 230 may be formed in a flat plate shape. As shown in Fig. 4, the peripheral edge of panel member 230 is connected to lower case 210 via brackets 80.

Structural member 300 is disposed on bottom wall 212. Each of power storage stacks 11 to 14, bottom wall 212, and structural member 300 define a space S below each of power storage stacks 11 to 14. In the present embodiment, structural member 300, each of power storage stacks 11 to 14, and bottom wall 212 define space S below each of power storage stacks 11 to 14. In other words, four spaces S are formed in housing 200 in the present embodiment.

As shown in Fig. 3, each space S extends in the first direction. Each space S functions as a flue-gas route (hereinafter, denoted as a "flue-gas route S"). Flue-gas route S is a route for expelling a gas, expelled through safety valve SV of a power storage cell 100, out of housing 200. Each flue-gas route S is in communication with a common space within housing 200 at an end of flue-gas route S in the first direction.

As shown in Fig. 3, an explosion-proof valve 290 is disposed in a portion of surrounding wall 215, the portion being opposite the flue-gas route S in the first direction. Explosion-proof valve 290 is disposed in the common space within housing 200. Explosion-proof valve 290 releases the pressure out of housing 200. Explosion-proof valve 290 opens when the pressure in housing 200 is greater than or equal to a reference value. Explosion-proof valve 290 is configured of a check valve. As shown in Fig. 3, if a gas is expelled from any of power storage cells 100, the gas spreads in the first direction through flue-gas route S and is expelled out of housing 200 through explosion-proof valve 290.

As shown in Fig. 4, structural member 300 abuts bottom wall 212 and the opposing ends of valve locating surface 114a of each power storage cell 100 in the second direction. Structural member 300 may support each of power storage stacks 11 to 14. In the present embodiment, structural member 300 has a pair of base units 310 and a pair of sealing units 320.

The pair of base units 310 are connected to bottom wall 212 by welding, for example. The pair of base units 310 are disposed opposite to each other via safety valve SV in the second direction (the width direction).

Each sealing unit 320 is in contact with valve locating surface 114a of power storage cell 100 and base unit 310. Each sealing unit 320 may be formed of a urethane resin. Each sealing unit 320 extends in the first direction. The inner surface of sealing unit 320 in the second direction is in contact with flue-gas route S. The ends of insulator member 150 in the second direction may be in contact with or apart from sealing units 320. Insulator member 150 abuts flue-gas route S.

Reinforcements 400 reinforce bottom wall 212. Reinforcement 400 is disposed between a pair of power storage stacks (a pair of power storage cell groups) adjacent to each other in the second direction. Specifically, as shown in Fig. 4, reinforcement 400 is disposed between a pair of cell bodies 110 adjacent to each other in the second direction, below a pair of external terminals 120 adjacent to each other in the second direction. Reinforcement 400 overlaps, in the up-down direction, the pair of external terminals 120 that are opposite to each other in the second direction.

Reinforcements 400 extend in the first direction. The ends of reinforcements 400 in the first direction may be in contact with or apart from surrounding wall 215. Reinforcement 400 is connected to base units 310. In the present embodiment, reinforcement 400 is connected to the ridges of base units 310 by welding, for example. In other words, reinforcement 400 has a function as a coupling unit coupling structural member 300 disposed below one of the pair of power storage stacks (e.g., first power storage stack 11 and second power storage stack 12) and structural member 300 disposed below the other one of the pair of power storage stacks. Reinforcement 400 has a shape that is convex upward from base unit 310.

Cooler 500 cools at least one power storage cell 100. A cooling medium (such as water) flows through cooler 500. As shown in Figs. 2 to 4, coolers 500 are disposed on upper wall 225. More specifically, cooler 500 are disposed in recesses 225b of upper wall 225.

Cooler 500 is thermally in contact with at least one power storage cell 100 via upper wall 225. In the present embodiment, a thermally-conductive adhesive 910, extending along the first direction, is disposed between cooler 500 and recess 225b.

In other words, in the present embodiment, cooler 500 is thermally in contact with each of power storage stacks 11 to 14 via upper wall 225 and the thermally-conductive adhesive 910. Note that being thermally in contact includes cooler 500 being in contact with power storage cell 100 only via upper wall 225, or cooler 500 being indirectly in contact with power storage cell 100 via a thermally conductive material (such as an adhesive or a securing member).

Covering member 600 covers cooler 500. Covering member 600 may be formed of a thermally insulating material. Note that the covering member 600 is not shown in Figs. 2 and 3.

Cooler 500 and covering member 600 form at least a portion of a floor 30 (see Fig. 3) of the vehicle compartment. Besides cooler 500 and covering member 600, floor 30 of the vehicle compartment may include a floor component (a cushioning member, a carpet, etc.) disposed on covering member 600. Note that the floor component is not shown in Figs. 2 and 4.

In power storage device 10 described above, if emissions, containing a gas, are expelled downward from safety valve SV due to a short circuit or the like in any one power storage cells 100, the emissions collide with insulator member 150. Due to the impact force at this time, a pair of intermediate vulnerable portions 152, which are formed at positions flanking the portion of insulator member 150 located below the power storage cell 100, and counter vulnerable portion 154, which is formed in an area surrounded by the pair of intermediate vulnerable portions 152, rupture. This causes the portion of insulator member 150, flanked by the pair of intermediate vulnerable portions 152, to come off and be separated downward from valve locating surface 114a and the emissions from power storage cell 100 to flow into flue-gas route S. Then, the gas, included in the emissions, expands in the first direction and is expelled from housing 200 through explosion-proof valve 290 as shown in Fig. 3. Due to this, the content (what is called debris) of power storage cell 100 included in the emissions is inhibited from adhering to external terminals 120 of power storage cell 100, for example.

As described above, in power storage device 10 according to the present embodiment, insulator member 150 is inhibited from coming off from valve locating surface 114a of an adjacent power storage cell adjacent to one power storage cell 100 due to a vent pressure of emissions and a portion of the emissions from the power storage cell 100 is inhibited from being thereby deposited between valve locating surface 114a and insulator member 150 of the adjacent power storage cell. Accordingly, the emissions, containing the gas expelled from the power storage cell 100, are inhibited from coming into contact with valve locating surface 114a of the adjacent power storage cell.

In the following, variations of the above embodiment are described.

### <Variation 1>

As shown in Fig. 6, adhesive member 180 may be disposed on portions of insulator member 150, other than those opposite the respective safety valves SV. In this example, adhesive member 180 is provided only in a pair of areas flanking each safety valve SV in the second direction. In other words, adhesive member 180 has a first adhesive portion 181 on one side of each safety valve SV in the second direction and a second adhesive portion 182 on the other side of safety valve SV in the second direction. The respective adhesive portions 181 and 182 extend from one end to the other end of each of power storage stacks 11 to 14 in the first direction.

### <Variation 2>

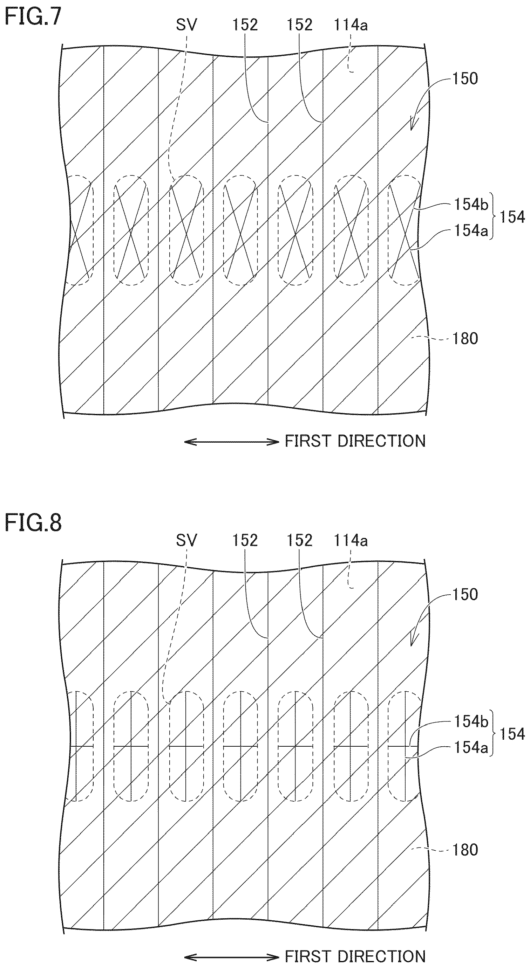

As shown in Fig. 7, first element 154a of counter vulnerable portion 154 may extend in a direction intersecting with both the first direction and the second direction in a plane orthogonal to the up-down direction of power storage device 10. Second element 154b may extend in a direction intersecting with both the first direction and the second direction in the plane and intersect with first element 154a. In other words, in this example, first element 154a and second element 154b are formed in a substantially an X shape.

### <Variation 3>

As shown in Fig. 8, second element 154b of counter vulnerable portion 154 may extend in the first direction and intersect with first element 154a near the intermediate portion of first element 154a.

A person skilled in the art will understand that the exemplary embodiments described above are specific examples of the following aspects.

### [Aspect 1]

A power storage device, comprising:
a plurality of power storage cells aligned along a first direction; and
an insulator member having a shape extending from a power storage cell disposed at one end of the plurality of power storage cells in the first direction to a power storage cell disposed at the other end of the plurality of power storage cells in the first direction, wherein
the plurality of power storage cells each have a valve locating surface, and each valve locating surface includes a safety valve,
the insulator member is in contact with the valve locating surfaces and includes a plurality of intermediate vulnerable portions, and
each intermediate vulnerable portion is formed at a position opposed to between a pair of power storage cells adjacent to each other in the first direction, and extends in a second direction orthogonal to both the first direction and an up-down direction of the power storage device .

According to the power storage device, when emissions, containing a gas, are expelled from one power storage cell through the safety valve, the pair of intermediate vulnerable portions, flanking the portion of the insulator member opposite the power storage cell, rupture and the portion of the insulator member opposite the power storage cell is thereby separated from the power storage cell. Due to this, the insulator member can be inhibited from being separated from the valve locating surface of an adjacent power storage cell adjacent to the power storage cell due to the vent pressure of the emissions, and a portion of the emissions from the power storage cell from being deposited between the valve locating surface and the insulator member of the adjacent power storage cell. Accordingly, the emissions containing the gas, expelled from the power storage cell, can be inhibited from coming into contact with the valve locating surface of the adjacent power storage cell.

### [Aspect 2]

The power storage device according to Aspect 1, wherein
the insulator member further includes counter vulnerable portions each formed at a position opposite to each safety valve.

In this aspect, the counter vulnerable portion is ruptured by the gas expelled from the safety valve of one power storage cell. Thus, when a gas is expelled from the power storage cell through the safety valve, the insulator member is more reliably inhibited from being separated from the valve locating surface of an adjacent power storage cell.

### [Aspect 3]

The power storage device according to Aspect 2, wherein
the counter vulnerable portions each include:
a first element extending in the second direction; and
a second element connected to ends of the first element in the second direction and extending in the first direction.

### [Aspect 4]

The power storage device according to Aspect 2, wherein
the counter vulnerable portions each include:
a first element extending in a direction intersecting with both the first direction and the second direction in a plane orthogonal to the up-down direction; and
a second element intersecting with the first element and extending in a direction intersecting with both the first direction and the second direction in the plane.

### [Aspect 5]

The power storage device according to Aspect 2, wherein
the counter vulnerable portions each include:
a first element extending in the second direction; and
a second element extending in the first direction and intersecting with the first element.

### [Aspect 6]

The power storage device according to any one of Aspects 1 to 5, further comprising
an adhesive member by which the insulator member is adhered to each valve locating surface, wherein
the adhesive member is disposed on a portion of the insulator member, including a portion opposite to each safety valve.

### [Aspect 7]

The power storage device according to any one of Aspects 1 to 5, further comprising
an adhesive member by which the insulator member is adhered to each valve locating surface, wherein
the adhesive member is disposed on a portion of the insulator member, excluding the portion opposite to each safety valve.

While the embodiments according to the present disclosure have been described above, the presently disclosed embodiments should be considered in all aspects illustrative and not restrictive. The scope of the present disclosure is defined by the appended claims. All changes which come within the meaning and range of equivalency of the appended claims are to be embraced within their scope.

## Claims

1. A power storage device (10), comprising:
a plurality of power storage cells (100) aligned along a first direction; and
an insulator member (150) having a shape extending from a power storage cell disposed at one end of the plurality of power storage cells (100) in the first direction to a power storage cell disposed at the other end of the plurality of power storage cells (100) in the first direction, wherein
the plurality of power storage cells (100) each have a valve locating surface (114a), and each valve locating surface (114a) includes a safety valve (SV),
the insulator member (150) is in contact with the valve locating surface (114a) and includes a plurality of intermediate vulnerable portions (152), and
each intermediate vulnerable portion (152) is formed at a position opposed to between a pair of power storage cells (100) adjacent to each other in the first direction, and extends in a second direction orthogonal to both the first direction and an up-down direction of the power storage device (10).

2. The power storage device (10) according to claim 1, wherein
the insulator member (150) further includes counter vulnerable portions (154) each formed at a position opposite to each safety valve (SV).

3. The power storage device (10) according to claim 2, wherein
the counter vulnerable portions (154) each include:
a first element (154a) extending in the second direction; and
a second element (154b) connected to ends of the first element (154a) in the second direction and extending in the first direction.

4. The power storage device (10) according to claim 2, wherein
the counter vulnerable portions (154) each include:
a first element (154a) extending in a direction intersecting with both the first direction and the second direction in a plane orthogonal to the up-down direction; and
a second element (154b) intersecting with the first element (154a) and extending in a direction intersecting with both the first direction and the second direction in the plane.

5. The power storage device (10) according to claim 2, wherein
the counter vulnerable portions (154) each include:
a first element (154a) extending in the second direction; and
a second element (154b) extending in the first direction and intersecting with the first element (154a).

6. The power storage device (10) according to any one of claims 1 to 5, further comprising
an adhesive member (180) by which the insulator member (150) is adhered to each valve locating surface (114a), wherein
the adhesive member (180) is disposed on a portion of the insulator member (150), including a portion opposite to each safety valve (SV).

7. The power storage device (10) according to any one of claims 1 to 5, further comprising
an adhesive member (180) by which the insulator member (150) is adhered to each valve locating surface (114a), wherein
the adhesive member (180) is disposed on a portion of the insulator member (150), excluding the portion opposite to each safety valve (SV).
